**Europäisches Patentamt**

**European Patent Office**

**Office européen des brevets**

(19)

(11) Veröffentlichungsnummer: **0 235 392**
**B1**

(12) # EUROPÄISCHE PATENTSCHRIFT

(45) Veröffentlichungstag der Patentschrift:
05.09.90

(21) Anmeldenummer: 86118048.7

(22) Anmeldetag: 24.12.86

(51) Int. Cl.⁵: **F04D 29/10**, H01S 3/03,
F16J 15/00

(54) Gebläse zum Umwälzen grosser Gasmengen, insbesondere für Hochleistungs-Laser.

(30) Priorität: 04.01.86 DE 3600126

(43) Veröffentlichungstag der Anmeldung:
09.09.87 Patentblatt 87/37

(45) Bekanntmachung des Hinweises auf die Patenterteilung:
05.09.90 Patentblatt 90/36

(84) Benannte Vertragsstaaten:
AT DE FR GB IT

(56) Entgegenhaltungen:
AT-B- 365 748
BE-A- 648 513
CH-A- 480 543
DE-B- 1 018 187
DE-C- 487 536
FR-A- 1 178 519
FR-A- 1 505 487
FR-A- 2 215 860
GB-A- 682 358
US-A- 3 942 716
US-A- 3 951 573
US-A- 4 500 093

(73) Patentinhaber: Fortuna-Werke Maschinenfabrik GmbH,
Pragstrasse 140, D-7000 Stuttgart 50(DE)

(72) Erfinder: Jesinger, Richard, Falsststrasse 11,
D-7300 Esslingen(DE)

(74) Vertreter: Witte, Alexander, Dr.-Ing., Witte, Weller &
Hilgenfeldt Patent- und Rechtsanwälte
Augustenstrasse 7, D-7000 Stuttgart 1(DE)

## Beschreibung

Die Erfindung betrifft ein Gebläse zum Umwälzen großer Gasmengen, insbesondere für Hochleistungs-Laser nach dem Gastransport-Prinzip, mit einem Gasförderteil und einem Antriebsteil, wobei das Gasförderteil einen Radialförderer aufweist, der in einer Verbindungsstrecke zwischen zwei Gaskanälen des Gasförderteiles angeordnet ist und das Antriebsteil eine Welle zum Antreiben des Radialförderers mit hohen Drehzahlen umfaßt, wobei ferner die Welle mit Radial-Drehlagern in einem druckdichten Gehäuse gelagert ist und im Abstand von dem Radialförderer auf der Welle mindestens zwei axial wirkende Dichtungen vorgesehen sind, die, vom Radialförderer aus betrachtet, einen ersten Raum, mindestens einen Schleusenraum sowie einen die Radial-Drehlager aufnehmenden Antriebsraum axial hintereinander bilden, und wobei schließlich der mindestens eine Schleusenraum und der Antriebsraum mit Leitungen zum Zu- oder Abführen von Druckmedien versehen sind.

Ein derartiges Gebläse ist aus der CH-A 480 543 bekannt.

Das bekannte Gebläse weist eine horizontale Antriebswelle auf, die an ihrem einen freien Ende einen horizontal wirkenden Radialförderer und an ihrem anderen freien Ende ein Axial-Gaslager aufweist. Anschließend an den Radialförderer ist die Welle von einem ringförmigen Innenraum umgeben, an den sich, vom Radialförderer weg, eine Sperrflüssigkeitsdichtung anschließt. Die Sperrflüssigkeitsdichtung besteht aus einer radial dichten Lagerung der Welle und einem mittleren Ringraum, in den mittels einer Leitung eine Sperrflüssigkeit unter Überdruck einleitbar ist. Auf der vom Innenraum abgewandten Seite der Sperrflüssigkeitsdichtung schließt sich ein Motorraum an, in dem sich ein Elektromotor als Antrieb für das Gebläse befindet. Der Innenraum und der Motorraum sind jeweils an ihrem an die Sperrflüssigkeitsdichtung angrenzenden Bereich mit einem als Auffangeinrichtung wirkenden Ringraum größeren Radius versehen, von denen jeweils eine Leitung zu Trennvorrichtungen, Austreibvorrichtungen und Verdichtern führt.

Das bekannte Gebläse ist zum Umwälzen von Gasen vorgesehen, die unter keinen Umständen aus dem Gebläse austreten dürfen, weil sie gesundheits- oder lebensgefährdend für die Umgebung wirken.

Um dies zu erreichen, ist die Sperrflüssigkeitsdichtung vorgesehen. Die unter Druck in den Ringraum der Sperrflüssigkeitsdichtung eintretende Sperrflüssigkeit gelangt durch die radial eng geführten Abschnitte in den Innenraum bzw. den Motorraum und wird dort in den Auffangeinrichtungen aufgefangen und über die Leitungen der Trennvorrichtungen und Austreibvorrichtungen weitergeführt, um nach Durchlaufen entsprechender Kreisläufe wieder verwendet zu werden. Auch das dabei erfaßte Fördergas bzw. Motorraumgas wird abgetrennt und dem Gasförderraum bzw. dem Motorraum wieder zugeführt.

Das bekannte Gebläse hat jedoch den Nachteil, daß verdampfende Sperrflüssigkeit im Innenraum auch in den Bereich des Gasförderstromes gelangen kann, ebenso wie es über den Motorraum in den Bereich des Antriebes gelangen kann.

Aus diesem Grunde ist es erforderlich, bei dem bekannten Gebläse eine Sperrflüssigkeit zu verwenden, deren zumindest spurenweise Zumengung zum Fördergas bzw. dem Bereich des Antriebes unkritisch ist. Dies stellt jedoch einen Nachteil dar, weil derart widerstreitende Forderungen durch eine Sperrflüssigkeit nicht erfüllt werden können.

Aus der US-A 3 951 573 ist ein weiteres Gebläse ähnlicher Art bekannt, bei dem die Rück- bzw. Unterseite des Radialförderers zusammen mit einer stationären Gegenfläche des Gehäuses ein Axial-Spiralrillenlager bildet. Bei diesem bekannten Gebläse ist die Anordnung der Welle vertikal, und das Eigengewicht der Welle und des Radialförderers werden über das genannte Axial-Spiralrillenlager abgefangen.

Spezielle Dichtungen oder Schleusenanordnungen entlang der Welle sind bei diesem bekannten Gebläse nicht vorgesehen.

Aus der DE-B 1 018 187 ist ferner eine Verdichter-Wellendichtung bekannt. Bei diesem bekannten Verdichter wird ein Axialgebläse verwendet, dem eingangsseitig über einen radial abgehenden Einlaßstutzen das umzuwälzende Gas eines Windkanals zugeführt wird, das am ausgangsseitigen Ende des Axialgebläses in axialer Richtung ausgepumpt wird. Der Rotor des Axialgebläses ist beidendig in Radiallagern und Axiallagern gehalten. Am eingangsseitigen Ende verlängert sich die Antriebswelle des Rotors über den Bereich des radial abgehenden Einlaßstutzens hinaus in den Außenraum des ansonsten druckdichten Verdichtergehäuses, um dort von nicht näher dargestellten Antriebsmitteln angetrieben zu werden. Die Antriebswelle ist dabei zwischen dem in den Außenraum austretenden Abschnitt und dem in den Rotor des Axialgebläses übergehenden Abschnitt durch einen Ringraum geführt, in dem mittels einer Pumpe ein Unterdruck erzeugt wird. Auf diese Weise soll erreicht werden, daß Umgebungsluft nicht in den Luftkreislauf des Windkanales gelangt.

Diese bekannte Anordnung hat jedoch den Nachteil, daß die Druckverhältnisse völlig undefiniert sind, weil weder der Unterdruck in dem genannten Ringraum, noch dieser Unterdruck im Verhältnis zum Druck im Pumpenraum oder im Außenraum eingestellt wird.

Aus der DE-C 908 692, der DE-C 877 519 sowie der DE-C 865 844 sind schließlich noch verschiedene Ausführungsformen von Spalt- und Schleifringdichtungen bekannt.

Schließlich ist in der DE-A 3 245 959 ein Gebläse beschrieben, das dazu dient, um in einem Laser nach dem Gastransport-Prinzip das Gas, beispielsweise $CO_2$ oder eine $N_2$/He-Mischung zwischen einer Anregungsstrecke und einer Kühlstrecke umzuwälzen. Bekanntlich nehmen nämlich bei derartigen Lasern verschiedene Leistungsdaten mit steigender Temperatur im Lasergas ab. Bei der bekannten Anordnung soll daher erreicht werden, daß durch kontinuierliche Umwälzung des Gases zwischen Anregungsstrecke und einem Wärmetauscher die Gastemperatur stets ausreichend niedrig gehalten wird.

Will man die bekannte Anordnung bei Hochleistungs-Lasern mit sehr hohen Ausgangsleistungen einsetzen, ist es erforderlich, das Gas im Laser mit Förderraten von mehreren 1000 oder 10 000 Kubikmetern pro Stunde umzuwälzen. Hierzu sind Drehzahlen des Radialförderers von einigen 10 000 bis 100 000 Umdrehungen pro Minute erforderlich, was andererseits zu Umfangsgeschwindigkeiten am Radialförderer von über 600 Metern pro Sekunde und zu Antriebsleistungen in der Größenordnung von einigen 10 kW führt.

Bei der bekannten Anordnung bleibt offen, auf welche Weise der Radial- bzw. Tangentialförderer angetrieben werden soll.

Der Erfindung liegt daher die Aufgabe zugrunde, ein Gebläse der eingangs genannten Art dahingehend weiterzubilden, daß unter keinen Umständen auch nur Spuren von Schmier- oder Sperrmitteln in den Gaskreislauf gelangen.

Diese Aufgabe wird erfindungsgemäß dadurch gelöst, daß der Radialförderer an seiner Unterseite mit in der Ebene der Unterseite angeordneten Spiralnuten versehen ist, so daß der erste Raum als mit den Gaskanälen verbundener Pumpenraum wirkt, daß der Schleusenraum mit einer Vakuumpumpe verbunden ist, die im Schleusenraum einen gegenüber dem Pumpenraum verminderten Druck einstellt, daß der Antriebsraum mit einer Schmierölpumpe verbunden ist, und daß der Antriebsraum zusätzlich mit einer Druckluftpumpe verbunden ist, die im Antriebsraum einen gegenüber dem Schleusenraum erhöhten Druck einstellt.

Die der Erfindung zugrundeliegende Aufgabe wird damit vollkommen gelöst, weil es erfindungsgemäß möglich ist, stets einen Medienstrom vom Pumpenraum in den Schleusenraum und nicht umgekehrt zu garantieren, so daß auch bei variierenden Druckverhältnissen im Pumpenraum lediglich Medium, insbesondere Fördergas, aus dem Pumpenraum in den Schleusenraum abgezogen werden kann, jedoch aus dem Schleusenraum keinerlei Schmier- oder Dichtmittel in den Pumpenraum und damit in den Gaskreislauf eintreten kann. Dies gilt vor allem auch deshalb, weil der Druck im Antriebsraum unmittelbar in dem an den Schleusenraum angrenzenden Bereich leicht mittels Druckluft geregelt eingestellt werden kann, wobei es lediglich erforderlich ist, daß das Schmieröl drucklos in diesen Bereich eintritt. Es bildet sich dann dort ein Aerosol als Schmieröl/Druckluftgemisch, das, soweit es überhaupt in den Schleusenraum übertritt, sofort über die zur Vakuumpumpe führende Leitung abgesaugt wird.

Diese Maßnahmen sind insgesamt von besonderem Vorteil, weil durch die definierten Druckzonen entlang der Welle einerseits die durch den speziellen Anwendungsfall, beispielsweise den Laser, vorgegebenen Druckverhältnisse eingehalten werden können, andererseits aber das Lager- und Schmiersystem des Gebläseantriebes nach Hochleistungsgesichtspunkten optimiert werden kann.

So kann erfindungsgemäß beispielsweise ein Laser, dessen Gas eine Mischung aus 75% Stickstoff und 25% Helium ist, mit einem Gasdruck in der Größenordnung von 100 bis 150 mbar betrieben werden. Bei Durchmessern des Radialförderers zwischen 50 und 500 mm und einer Antriebsleistung zwischen 1 und 50 kW werden bei Drehzahlen zwischen 20 000 und 180 000 Umdrehungen pro Minute Fördervolumina zwischen 800 und 20 000 Kubikmetern pro Stunde erreicht, wobei im Lagerungs- und Schmiersystem ein Druck eingestellt werden kann, der bis zu 10 bar über dem Druck des Lasergases liegen kann.

Die Erfindung gewährleistet in diesem Leistungsbereich, daß ein optimaler Schnellauf bei den genannten Antriebsleistungen zum Erreichen der genannten Förderraten garantiert werden kann, wobei gleichzeitig sichergestellt ist, daß aus dem Hochdruck-Schmier- und Lagersystem keinerlei Schmiermittel in den Pumpenraum, d.h. den Gasraum, beispielsweise des Lasers, gelangen können.

Es ergibt sich somit der Vorteil, daß ein dreistufiges definiertes Druckprofil entlang der Achse der Antriebswelle eingestellt wird, wobei der Schleusenraum als Puffer zwischen Pumpenraum und Antriebsraum wirkt, so daß die aus dem Hochdruck-Antriebsraum über die Gleitdichtungen austretenden Schmiermittel aus dem Schleusenraum weggefördert werden, ehe sie in den Pumpenraum gelangen können.

Eine besonders bevorzugte Ausführungsform der Erfindung zeichnet sich dadurch aus, daß die Schmierölpumpe Öl aus einer Ölwanne fördert und daß die Ölwanne über eine Rücköpumpe mit einem der Vakuumpumpe vorgeschalteten Ölabscheider verbunden ist.

Diese Maßnahme hat den Vorteil, daß ein vollkommen geschlossener Kreislauf der Schmiermittel zur Verfügung steht. So wird insbesondere das im abgesaugten Aerosol enthaltene Schmieröl mittels des Ölabscheiders und der Rücköpumpe zurückgewonnen.

Weiterhin wird bei einem derartigen System eine besonders gute Wirkung dann erzielt, wenn dem Öl der Ölwanne ein verflüssigtes Gas, vorzugsweise Frigen, zugemischt wird, ferner an die Ölwanne oberhalb der Oberfläche des Öls ein Eingang eines Verdichters angeschlossen ist, in den das vom Öl verdampfende Gas komprimiert wird und schließlich das durch Kompression verflüssigte Gas dem Öl wieder beigemengt wird.

Auf diese Weise wird eine besonders effektive Kühlung der Lager und gegebenenfalls auch der Antriebselemente des Gebläseantriebes erreicht, weil das dem Öl in verflüssigter Form beigemengte Gas in dieser Form an die Schmier- und Kühlstellen gelangt und dort verdampft, wodurch infolge der Verdampfungskälte ein zusätzlicher Kühleffekt entsteht. Das verdampfte Gas gelangt dann zusammen mit dem Schmieröl wieder in die Ölwanne und wird dort in einem geschlossenen Kreislauf wieder verdichtet, dadurch verflüssigt und in der flüssigen Phase dem Öl wieder beigemengt.

Bei Ausführungsbeispielen der Erfindung weisen die Dichtungen mindestens eine axiale und/oder radiale Gleitdichtfläche auf.

Bei einem bestimmten Ausführungsbeispiel der Erfindung ist die Dichtung zwischen Pumpenraum und Schleusenraum eine Radial-Gleitringdichtung mit zwischen Gehäuse und Welle wirkender axialer Gleitringfläche.

Diese Maßnahme hat den Vorteil, daß im unmittelbar an den Pumpenraum grenzenden Bereich eine baulich einfache Dichtung eingesetzt werden kann, die in diesem Bereich zwei im wesentlichen von Gas gefüllte Räume, nämlich den Pumpenraum und den Schleusenraum, voneinander trennen muß.

Bei einem weiteren Ausführungsbeispiel der Erfindung ist die Dichtung zwischen Schleusenraum und Antriebsraum eine Axial-Gleitringdichtung mit zwischen Gehäuse und Welle wirkender radialer Gleitringfläche.

Diese Maßnahme hat den Vorteil, daß sich die Axial-Gleitringdichtung insbesondere zum Abdichten des Hochdruck-Antriebsraumes eignet, in dem sich, wie bereits erwähnt, ein unter hohem Druck stehendes Schmieröl bzw. ein Schmieröl-Druckluft-Aerosol befindet.

Die Axial-Gleitringdichtung ist bevorzugt so ausgebildet, daß die Dichtung zwischen Schleusenraum und Antriebsraum einen axialen Gleitring aufweist, der elastisch auf einem Gegenring aufliegt. Insbesondere ist der axiale Gleitring auf einem Umfang mit einem Ende eines Faltenbalgs verbunden, dessen anderes Ende an einem Umfang des Gehäuses anliegt, wobei der Gegenring auf der Welle sitzt.

Diese Maßnahme hat den Vorteil, daß besonders einfach und betriebssicher eine Axialdichtung hergestellt wird, bei der der Faltenbalg im wesentlichen die gegeneinander abzudichtenden Räume, nämlich den Schleusenraum und den Antriebsraum, trennt. Die Maßnahme, den Gegenring auf der Welle anzuordnen, hat den Vorteil, daß der Gegenring leicht auf die Welle aufgeschrumpft werden kann und gleichzeitig dazu dienen kann, andere Elemente auf der Welle zu halten, beispielsweise die Wellenlager.

Besonders bevorzugt bei diesem Ausführungsbeispiel ist, wenn der Gegenring mindestens einen Schmieröl führenden Kanal aufweist, wobei eine Bohrung den Kanal mit der Gleitringfläche zwischen Gleitring und Gegenring verbindet.

Diese Maßnahme hat den wesentlichen Vorteil, daß gleichzeitig eine Kühlung und eine Schmierung der Axial-Gleitringdichtung hergestellt wird, die bei den weiter oben genannten Betriebsdaten eine Umfangsgeschwindigkeit von beispielsweise 120 m/sek. aufweisen kann. Das durch den Gegenring strömende Schmieröl, dessen Durchsatz entsprechend eingestellt werden kann, führt nämlich zum einen nicht nur die Reibungswärme ab, die in der Gleitringdichtung entsteht, sie schmiert gleichzeitig die Gleitringfläche und vermindert damit das Entstehen von Reibungswärme bereits im Ansatz.

Eine weitere bevorzugte Variante dieses Ausführungsbeispiels zeichnet sich dadurch aus, daß neben dem Gegenring ein Radial-Drehlager zum Lagern der Welle im Gehäuse angeordnet ist und daß eine weitere Bohrung des Gegenrings vom Kanal zu dessen Oberfläche führt und auf das Radial-Drehlager gerichtet ist.

Auf diese Weise ergibt sich der wesentliche Vorteil, daß das Schmieröl nicht nur zum Kühlen und Schmieren der Axial-Gleitringdichtung dient sondern darüberhinaus auch zum Schmieren des Lagers der Welle, wobei sich als gewünschter Nebeneffekt noch ergibt, daß die gleichzeitige Schmierung des Lagers einen erhöhten Schmieröldurchsatz erfordert, was wiederum die Kühlung des Gegenringes verbessert. Außerdem ergibt sich eine besonders einfache Bauweise dadurch, daß mit nur einer Schmiermittelzufuhr gleichzeitig die Axial-Gleitringdichtung und auch des Wellenlager geschmiert und gekühlt werden.

Besonders bevorzugt ist dabei, wenn jeweils mehrere Kanäle und Bohrungen bzw. weitere Bohrungen über den Umfang des Gegenrings verteilt angeordnet sind.

Auf diese Weise ergibt sich nämlich eine besonders gleichmäßige Zufuhr von Schmieröl bei besonders großem Schmieröldurchsatz.

Die Gleitringdichtungen der vorgenannten Ausführungsbeispiele sind bevorzugt so ausgebildet, daß die die Dichtung bildenden Teile mindestens teilweise aus Metall oder kunststoffgetränkter Kohle oder Graphit oder Kunststoff oder Keramik, bzw. Kombinationen der vorgenannten Materialien bestehen.

Diese Maßnahmen sind von besonderem Vorteil, wie praktische Versuche ergeben haben.

Bei weiteren Ausführungsbeispielen der Erfindung werden die Gleitringflächen der Dichtungen durch Justage oder Oberflächenbearbeitung definiert und parallel zueinander eingestellt, derart, daß sich beim Lauf der Welle ein definierter Taumel in den Dichtungen ergibt.

Diese Maßnahme hat den Vorteil, daß infolge der definierten Taumelbewegung Schmierkeile gebildet werden, die ebenfalls für eine besonders effektive Schmierung der Gleitringdichtungen sorgen.

Entsprechendes gilt für weitere Ausführungen der Erfindung, bei denen die Gleitringflächen der Dichtungen mit Spiral-Förderrinnen versehen sind, die ihrerseits eine positive oder negative Förderrichtung haben können.

Auch diese Maßnahme hat den Vorteil, einen Selbstschmiereffekt zu erreichen.

Bei einem Ausführungsbeispiel der Erfindung sind Sensoren zum Erfassen des Drucks im Schleusenraum und im Pumpenraum vorgesehen, die Sensoren sind an einen Regler angeschlossen und der Regler steht ausgangsseitig mit der Druckluftpumpe und der Vakuumpumpe in Wirkverbindung, derart, daß bei unterschiedlichen Drehzahlen des Gebläses vorbestimmte Druckdifferenzen oder vorbestimmte Druckquotienten zwischen Pumpenraum, Schleusenraum und Antriebsraum herrschen.

Diese Maßnahme eignet sich insbesondere, um den besonderen Verhältnissen beim Anlaufen und Auslaufen des Gebläses Rechnung zu tragen. Um nämlich auch in diesen Betriebsfällen zu gewährleisten, daß die der Erfindung zugrunde liegende Aufgabe gelöst wird, müssen die Druckwerte enlang der axialen Richtung der Antriebswelle überwacht und daraus entsprechende Stellgrößen abgeleitet und daraus entsprechende Stellgrößen abgeleitet werden. Durch die genannten Merkmale wird nun erreicht, daß durch Erfassen der beiden genannten Druckwerte der Tatsache Rechnung getragen werden kann, daß bei niedrigeren Drehzahlen auch der Förderdruck des Radialförderers abnimmt. Dieser Druck wird nun mit den von der Vakuumpumpe im Schleusenraum erzeugten Unterdruck verglichen und es werden daraus Stellgrößen für die Vakuumpumpe und die Druckluftpumpe abgeleitet, so daß ein definiertes Druckprofil über die verschiedenen Räume aufrecht erhalten werden kann, das seinerseits wiederum für unterschiedliche Drehzahlen optimiert sein kann. Außerdem ist es selbstverständlich auch möglich, mittels der von den Sensoren abgenommenen Signale unmittelbar in die Vakuumpumpe des Lasers einzugreifen.

Weitere Vorteile ergeben sich aus der Beschreibung und der beigefügten Zeichnung.

Es versteht sich, daß die vorstehend genannten und die nachfolgend noch geschilderten Merkmale nicht nur in der jeweils angegebenen Kombination sondern auch in anderen Kombinationen oder auch in Alleinstellung verwendet werden können, ohne den Rahmen der vorliegenden Erfindung zu verlassen.

Es versteht sich vor allem, daß der genannte Anwendungsfall bei Lasern nach dem Gastransport-Prinzip nur beispielhaft zu verstehen ist und daß das erfindungsgemäße Gebläse selbstverständlich auch bei zahlreichen anderen Anwendungsfällen eingesetzt werden kann, bei denen im Rahmen industrieller Fertigungsprozesse Gasdurchsätze mit hoher Förderrate benötigt werden.

Ausführungsbeispiele der Erfindung sind in der Zeichnung dargestellt und werden nachfolgend anhand der Beschreibung erläutert. Es zeigen:

Fig. 1 eine schematische Darstellung eines erfindungsgemäßen Gebläses mit zugehörigen Druckmittelkreisläufen, in Gesamtansicht;

Fig. 2 in vergrößertem Maßstab die mechanischen Einzelheiten des Antriebes des Gebläses gemäß Fig. 1;

Fig. 3 in noch weiter vergrößertem Maßstab einen Ausschnitt aus Fig. 2 zur Erläuterung von erfindungsgemäß verwendeten Dichtungen und Lagerungen;

Fig. 4 einen radialen Druckverlauf zur Erläuterung der Anordnung gemäß Fig. 3;

Fig. 5 einen Radialförderer, in einer Ansicht von unten, im Maßstab der Fig. 1;

Fig. 6 eine Teilansicht aus Fig. 1, jedoch für ein weiteres Ausführungsbeispiel der Erfindung.

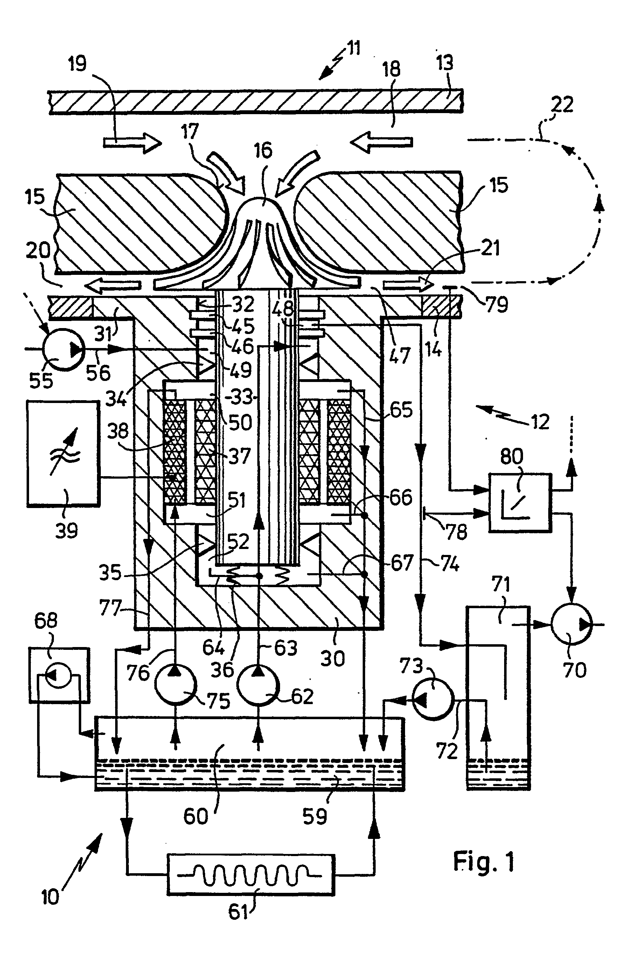

In Fig. 1 bezeichnet 10 als Ganzes ein Ausführungsbeispiel eines erfindungsgemäßen Gebläses. Das Gebläse 10 wird grob in ein Gasförderteil 11 und ein Antriebsteil 12 unterteilt.

Das Gasförderteil 11 umfaßt alle für die Förderung und Leitung des Gases erforderlichen Elemente. Hierzu sind zwischen einer oberen Begrenzungswand 13 und einer unteren Begrenzungswand 14 Leit- und Trennelemente 15 vorgesehen, die zwischen sich eine Verbindungsstrecke freilassen, in der ein Radialförderer 16 angeordnet ist. Die Oberflächenkontur 17 der Leit- und Trennelemente 15 sind an die entsprechende Oberflächenkontur des Radialförderers 16 angepaßt.

Auf diese Weise umfaßt das Gasförderteil 11 einen oberen Gaskanal 18, in dem ein Gas, beispielsweise eine Edelgasmischung, in Richtung der mit 19 bezeichneten Pfeile strömen kann sowie einen unteren Gaskanal 20, in dem das Gas die Richtung von Pfeilen 21 aufweist. Die Gaskanäle 18, 20 treffen sich im Bereich weiterer Umlenkelemente, wie mit einer Bahn 22 in Fig. 1 angedeutet.

Wird das erfindungsgemäße Gebläse 10 beispielsweise bei einem Hochleistungs-Laser eingesetzt, so kann der obere Gaskanal 18 die Anregungsstrecke sein, während sich zweckmäßigerweise im Verlaufe des unteren Gaskanals 20 ein oder mehrere Wärmetauscher befinden können, um das umgewälzte Gas zu kühlen.

Es versteht sich ferner, daß die eingezeichnete Richtung der Pfeile 19, 21 bei entsprechender Dimensionierung der Schaufeln des Radialförderers 16 auch entgegengesetzt sein kann. Es sei ferner nochmals betont, daß das Anwendungsbeispiel von Lasern nach dem Gastransport-Prinzip im vorliegenden Zusammenhang nur als illustrierendes Beispiel dient und die Erfindung keinesfalls auf diesen Anwendungsfall einschränkt.

Das Antriebsteil 12 umfaßt im wesentlichen ein zylindrisches Gehäuse 30, das an seiner Oberseite in einen Ringflansch 31 ausläuft, der in die untere Begrenzungswand 14 integriert oder an dieser angeschraubt ist.

Im Zentrum des Ringflansches 31 befindet sich eine Öffnung 32, durch die eine Welle 33 ragt, an der der Radialförderer 16 drehstarr angesetzt ist.

Die Welle 33 ist in einem oberen Radiallager 34 und einem unteren Radiallager 35 gehalten, an ihrer Unterseite ist sie mit einer federnden Abstützung 36 gegenüber dem Gehäuse 30 versehen.

Es sei an dieser Stelle auch betont, daß die im vorliegenden Zusammenhang verwendeten Begriffe "oben" und "unten", ebenso wie die Darstellung in den Figuren nur beispielhaft zu verstehen ist. Das erfindungsgemäße Gebläse kann selbstverständlich auch in horizontaler Einbaulage oder nach unten gerichtet eingesetzt werden, ohne daß dies den Rahmen der Erfindung sprengt.

Die Welle 33 ist mit einer Rotorwicklung 37 versehen, die zwischen den Radiallagern 34 und 35 angeordnet ist. Der Rotorwicklung 37 steht eine Statorwicklung 38 gegenüber, die am Gehäuse 30 angeordnet ist. Die Statorwicklung 38 steht mit einem Versorgungsaggregat 39 in Verbindung, das eine elektrische Versorgungsspannung geeigneter Amplitude und Frequenz, insbesondere variabler Frequenz, erzeugt. Typischerweise hat das Versorgungsaggregat 39 eine Ausgangsleistung zwischen einem und 50 KW, wobei die Ausgangsfrequenz zwischen 700 und 3000 Hz einstellbar ist.

Außerdem enthält das Versorgungsaggregat 39 noch in Fig. 1 der Übersichtlichkeit halber nicht dargestellte Auswerteinheiten für die Überwachung der Schmieröltemperatur, der Schmierölmenge, der Leistungsaufnahme sowie eine Erkennungsschaltung für Lagerschäden und dgl. mehr. Diese Einheiten sind jedoch an sich bekannt und brauchen daher im vorliegenden Zusammenhang nicht näher erläutert zu werden.

Oberhalb des oberen Radiallagers 34, jedoch unterhalb der Öffnung 32 sind eine obere Dichtung 45 und eine untere Dichtung 46 zu erkennen. Diese, in axialer Richtung der Welle 33 wirkenden Dichtungen 40, 46 definieren somit einen oberhalb der oberen Dichtung 45 liegenden Pumpenraum 47, der mit den unteren Gaskanal 20 in Verbindung steht, weiterhin einen Schleusenraum 48 zwischen den Dichtungen 45, 46 sowie einen ersten Antriebsraum 49 zwischen der unteren Dichtung 46 und dem oberen Radiallager 34.

Weiterhin sei der Raum zwischen oberem Radiallager 34 und Rotorwicklung 37 bzw. Statorwicklung 38 als zweiter Antriebsraum 50, der Raum zwischen Rotorwicklung 37 bzw. Statorwicklung 38 und dem unteren Radiallager 35 als dritter Antriebsraum 51 und der Raum unterhalb des unteren Radiallagers 35, in dem sich auch die federnde Abstützung 36 befindet, als vierter Antriebsraum 52 bezeichnet.

An das Antriebsteil 12 des Gebläses 10 sind verschiedene Druckmittelkreisläufe angeschlossen.

Eine Druckluftpumpe 55 bzw. ein übliches Druckluftaggregat ist über eine Druckluftleitung 56 mit dem ersten Antriebsraum 49 verbunden.

Zur Schmierung und Kühlung der verschiedenen Lager- und Antriebselemente ist Öl 59 in einer Ölwanne 60 vorgesehen. Die Ölwanne 60 ist an einen Wärmetauscher 61 angeschlossen, um das Öl 59 ständig auf einer vorbestimmten niedrigen Temperatur zu halten.

Eine Schmierölpumpe 62 fördert Öl 59 aus der Ölwanne 60 in eine erste Schmierölleitung 63, die das Gehäuse 30 in Richtung der Achse der Welle 33 durchsetzt. Die erste Schmierölleitung 63 setzt sich axial in der Welle 33 fort und verläuft dann radial nach außen, um ebenfalls im ersten Antriebsraum 49 zu enden.

Eine zweite Schmierölleitung 64 zweigt im vierten Antriebsraum 52 von der ersten Schmierölleitung 63 ab und dient zur unmittelbaren Versorgung des unteren Radiallagers 35.

Eine dritte Schmierölleitung 65 führt aus dem zweiten Antriebsraum 50 weg. Sie vereinigt sich mit einer aus dem dritten Antriebsraum 51 kommenden vierten Schmierölleitung 66 und einer aus dem vierten Antriebsraum 52 kommenden fünften Schmierölleitung 67 und führt in die Ölwanne 60 zurück.

Dem Öl 59 kann ein verflüssigbares Gas, beispielsweise Frigen, zugemischt sein. Das mit verflüssigtem Frigen versetzte Öl gelangt zu den verschiedenen Kühl- und Schmierpunkten, wobei infolge der dort herrschenden Temperatur das Frigen verdampft und durch die Verdampfungskälte der Kühlprozeß weiter gefördert wird.

Das Frigen gelangt nun im gasförmigen Zustand in die Ölwanne 60 zurück. Es wird dort abgesaugt und einem Verdichter 68 zugeführt, der es so weit komprimiert, daß es wieder verflüssigt wird. Das verflüssigte Frigen wird nun dem Öl 59 wieder beigemengt.

Weiterhin ist eine Vakuumpumpe 70 vorgesehen, der eingangsseitig ein Ölabscheider 71 vorgeordnet ist. Vom Ölabscheider 71 führt aus dessen Ölsumpf eine Öl-Rückführleitung 72 über eine Rückölpumpe 73 in die Ölwanne 60.

Eingangsseitig ist der Ölabscheider 71 mit einer Saugleitung 74 verbunden, die zum Schleusenraum 78 führt.

Weiterhin ist eine Kühlölpumpe 75 vorgesehen, die Öl 59 aus der Ölwanne 60 fördert und zwar an eine erste Kühlölleitung 76, die in den Bereich der Statorwicklung 38 führt und diese kühlt. Von dort führt eine zweite Kühlölleitung 77 zurück in die Ölwanne 60.

Schließlich sind an der Saugleitung 74 und am Pumpenraum 47 ein erster Drucksensor 78 bzw. ein zweiter Drucksensor 79 vorgesehen, die mit einem Regler 80 in Wirkverbindung stehen. Der Regler 80 ist ausgangsseitig an Steuereingänge der Vakuumpumpe 70 bzw. der Druckluftpumpe 55 angeschlossen. Außerdem kann, bei Anwendung des erfindungsgemäßen Gebläses 10 bei einem Laser, der Regler 80 auch an die Vakuumpumpe des Lasers angeschlossen sein.

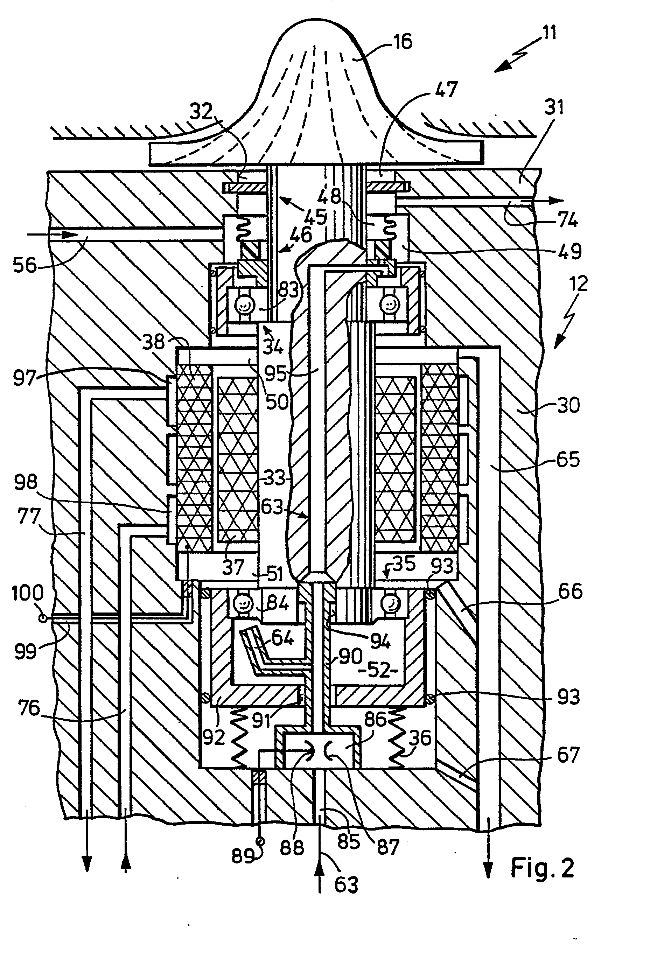

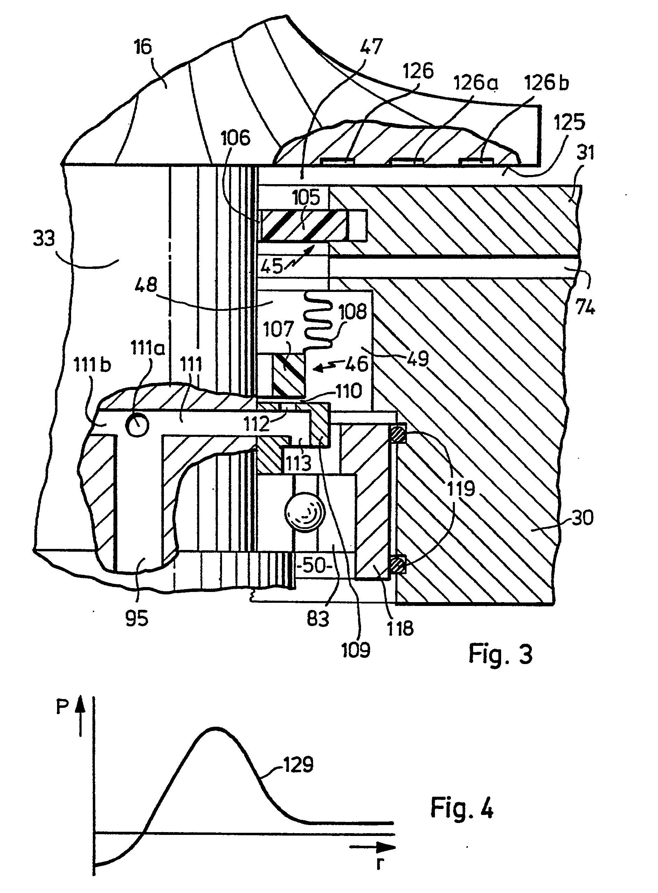

Die Fig. 2 und 3 zeigen weitere Einzelheiten des in Fig. 1 nur schematisch und gesamthaft angedeuteten Gebläses 10.

Aus Fig. 2 erkennt man, daß vorzugsweise die Radiallager 34, 35 als Wälzlager 83, 84 ausgebildet sind.

Ferner erkennt man, daß die erste Schmierölleitung 63 zunächst durch einen axialen Kanal 35 im Gehäuse 30 gebildet wird. Der Kanal 85 geht in eine Meßeinheit 86 über, in der sich eine Venturi-Düse 87 befindet. An der Venturi-Düse 87 ist ein Drucksensor 88 angeordnet, der über ein geeignetes Kabel mit einer Anschlußbuchse 89 verbunden ist.

Die Meßeinheit 86 ist Bestandteil eines drehstarren Spritzteiles 90, das mit dem Gehäuse 30 verbunden ist. Das Spritzteil 90 durchsetzt oberhalb der Meßeinheit 86 eine Öffnung 91 in einer Lagerschale 92, die schwimmend mit O-Ringen 93 im Gehäuse 30 gehalten ist. Zwischen den O-Ringen 93 kann sich ein Ölpolster, eine mechanische Federung oder dergleichen befinden, die zum dämpfenden Lagern der Lagerschale 92 dient.

In der topfförmig ausgebildeten Lagerschale 92 erstreckt sich seitlich vom Spritzteil 90 weg die zweite Schmierölleitung 94, die nach oben abgewinkelt und auf das Wälzlager 84 gerichtet ist. Das obere Ende des Spritzteils 90 ist in eine zentrale Bohrung 94 der Welle 33 eingesetzt, so daß dort eine Drehlagerung des Spritzteiles 90 gebildet ist. Die Bohrung 94 in der Welle 33 setzt sich in einem zentralen Kanal 95 fort, der in der Nähe des oberen Endes der Welle 33 seitlich in radiale Kanäle übergeht, wie dies im einzelnen noch zu Fig. 3 beschrieben werden wird.

Weiterhin erkennt man in Fig. 2, daß die Statorwicklung 38 an ihrem äußeren Umfang mit Kühl-Ringnuten 97, 98 versehen ist, die mit den Kühlölleitungen 76, 77 in Verbindung stehen.

Durch eine weitere Bohrung 99 im Gehäuse 30 ist ein Anschlußkabel zur Statorwicklung 38 geführt, gungsaggregates 39 reicht.

Fig. 3 zeigt in weiteren Einzelheiten die Dichtungen am oberen Ende der Welle 33.

Man erkennt zunächst, daß die obere Dichtung 45 durch eine Radial-Gleitringdichtung 105 gebildet wird, die dicht im oberen Teil des Gehäuses 30 sitzt und zur Welle 33 nur einen Ringspalt 106 frei läßt. Die Radial-Gleitringdichtung 105 bildet somit die Dichtung zwischen dem Pumpenraum 47 und dem Schleusenraum 48.

Der Schleusenraum 48 wird nach unten durch eine Axial-Gleitringdichtung begrenzt, die durch einen Axial-Gleitring 107 gebildet wird, der am Gehäuse 30 elastisch über einen Faltenbalg 108 aufgehängt ist. Der Axial-Gleitring 107 läuft auf einem auf die Welle 33 aufgeschrumpften Gegenring 109, wobei zwischen den Ringen 107, 109 ein radialer Ringspalt 110 verbleibt.

Der zentrale Kanal 95 in der Welle 33 geht in der Höhe des Gegenringes 109 in mehrere radiale Kanäle 111, 111a, 111b über, die den Gegenring 109 durchsetzen und nach oben in eine obere Bohrung 112 und nach unten in eine untere Bohrung 113 ausmünden. Die obere Bohrung 112 geht in den Ringspalt 110 über, während die untere Bohrung 113 auf das Wälzlager 83 gerichtet ist.

Das Wälzlager 83, das ebenso wie das untere Wälzlager 84 auf einem radialen Absatz der Welle 33 sitzt, ist gleichfalls mittels einer Lagerschale 118 gegengelagert, die über O-Ringe 119 gedämpft am Gehäuse 30 angeordnet ist.

Die Wirkungsweise des Gebläses 10, wie dies anhand der Fig. 1 bis 3 geschildert wurde, ist wie folgt:

Durch Einstellung des Versorgungsaggregates 39, insbesondere dessen Ausgangsfrequenz und Ausgangsleistung kann das Gebläse 10 aus der Ruhestellung hochgefahren werden. Bei niedrigen Drehzahlen, wie sie während des Hochlaufens des Gebläses 10 auftreten, herrscht zunächst im Pumpenraum 47 ein verhältnismäßig niedriger Druck. Über die Sensoren 78, 79 wird dieser Druck, ebenso wie der Druck im Schleusenraum 48 erfaßt und es wird die Vakuumpumpe 70 so eingestellt, daß über die obere Dichtung 45 ein definiertes Druckgefälle eintritt. Auch wird die Druckluftpumpe 55 so eingestellt, daß der Schmiermitteldruck im ersten Antriebsraum 49 einen zu den beiden vorgenannten Drücken entsprechenden Druck einnimmt.

Wie man deutlich aus Fig. 1 erkennen kann, ist die Welle 33 "fliegend" gelagert, weil sich die Antriebselemente, die durch die Rotorwicklung 37 und die Statorwicklung 38 symbolisiert sind, zwischen den Radiallagern 34, 35 befinden. Die axiale Abstützung der Welle 33 wird zum einen über die federnde Abstützung 36 am unteren Ende der Welle 33 und zum anderen über die Druckeinstellung im Pumpenraum 47 erreicht.

Das Gebläse 10 wird vorzugsweise so betrieben, daß die Nenndrehzahl im überkritischen Bereich, d.h. oberhalb der Eigenresonanz des beweglichen Systems liegt.

Hierdurch ergibt sich die in den Figuren deutlich erkennbare leichte und kompakte Bauweise bei gleichzeitiger Reduzierung der Lagerkräfte, sicherem Betrieb, auch im kritischen Drehzahlbereich, wobei die Lagerschalen 92, 118, die ihrerseits "schwimmend" aufgehängt sind, eine Lagerdämpfung in der Ebene beider Radiallager 34, 35 bewirken. Auch dies trägt zu geringen Schwingungsamplituden und damit optimaler Laufruhe des Gebläses 10 bei.

Nach Erreichen der Nenndrehzahl befinden sich alle Schmier-, Öl- und sonstigen Druckmittelsysteme im Gleichgewicht.

Die Schmierölpumpe 62 fördert aus der Ölwanne 60 Schmieröl in die erste Schmierölleitung 63 und die zweite Schmierölleitung 64. Die zweite Schmierölleitung 64 spritzt von unten Schmieröl gegen das untere Radiallager 35, während (vgl. Fig. 3) die erste Schmierölleitung 63 durch den zentralen Kanal 95 und die vorzugsweise mehreren radialen Kanäle 111, 111a, 111b führt und dann an vorzugsweise mehreren Stellen den Gegenring 109 durchsetzt. Hierdurch wird sowohl der Gegenring 109 gekühlt wie auch durch direkte Schmiermittelbeaufschlagung die untere Dichtung 46 in Gestalt des Axial-Gleitringes 107 auf dem Gegenring 109 sowie das obere Radiallager 34 in Gestalt des Wälzlagers 83 geschmiert.

Das aus der unteren Bohrung 113 nahezu drucklos austretende Schmieröl vermischt sich im ersten Antriebsraum 49 mit der aus der Druckluftleitung 56 eintretenden Druckluft und bildet im ersten Antriebsraum 49 einen aerosolartigen Ölschaum, der unter einem durch Beeinflussung der Druckluftpumpe 55 leicht und reaktionsschnell einzustellenden Druck steht.

Durch den Ringspalt 110 wird ein gewisser Leckstrom dieses Öl/Druckluftaerosols vom ersten Arbeitsraum 49 in den Schleusenraum 48 übertreten, er wird von dort jedoch über die Saugleitung 74 abgesaugt werden. Hierzu ist ein Durckgefälle erforderlich, das dadurch eingestellt wird, daß die Druckluftpumpe 55 im ersten Antriebsraum 49 einen Überdruck in der Größenordnung von mehreren bar einstellt, während die Vakuumpumpe 70 über die Saugleitung 74 im Schleusenraum 48 einen Unterdruck einstellt. Diese Druckeinstellung gewährleistet auch, daß über den Ringspalt 106 in der Radial-Gleitringdichtung 105 ein Leckstrom aus dem Pumpenraum 47 nur in den Schleusenraum 48 hinein erfolgen kann.

Somit wird über die Saugleitung 74 ein Gemisch aus Schmieröl, Druckluft und Transportgas des Gasförderteils 11 abgesaugt, gegebenenfalls noch ein verdampftes Kühlgas, insbesondere Frigen, das dem Schmieröl beigemischt sein kann.

Dieses abgesaugte Gemisch gelangt in den Ölabscheider 71, in dem sich das Schmieröl in einem Ölsumpf sammelt und über die Öl-Rückführleitung 72 unter Wirkung der Rückölpumpe 73 zurück in die Ölwanne 60 gefördert wird.

Schließlich ist noch das Kühlsystem für die Antriebselemente vorgesehen, das aus der Kühlölpumpe 75 und den Kühlölleitungen 76, 77 sowie den Kühl-Ringnunten 97, 98 besteht.

Es versteht sich, daß das Kühlsystem für die Antriebselemente auch mit anderen Kühlmitteln arbeiten kann, beispielsweise mit Kühlwasser und dergleichen.

Es versteht sich ferner, daß das untere Radiallager 35 (Fig. 1) ebenso ausgebildet und gekühlt werden kann, wie dies beim oberen Radiallager 34 der Fall ist, dessen Einzelheiten insbesondere Fig. 3 zu entnehmen sind.

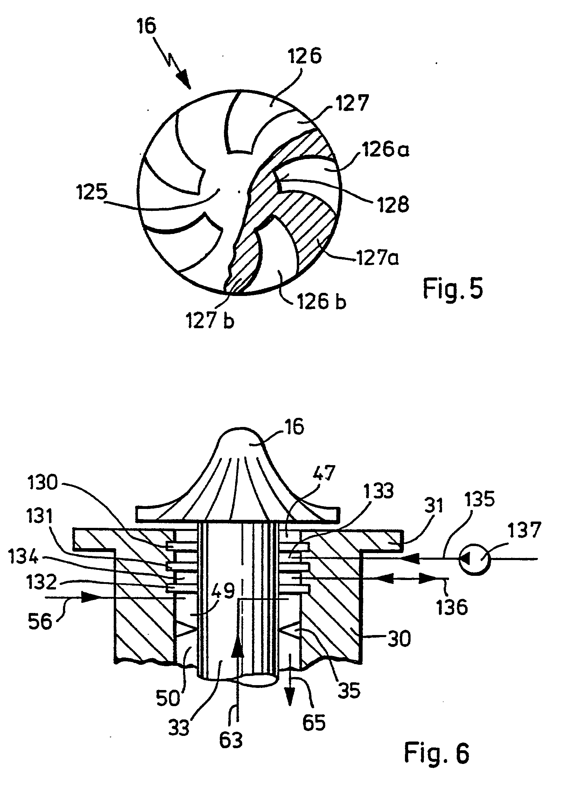

Anhand der Fig. 4 und 5 ist eine Variante der erfindungsgemäßen Anordnung veranschaulicht, bei der zur weiteren Reduzierung des Leckstroms über den Ringspalt 106 der Radial-Gleitringdichtung 105 ein radiales Druckprofil im Pumpenraum 47 eingestellt wird, wie dies durch den Verlauf 129 in Fig. 4 veranschaulicht ist.

Wie man aus den Fig. 3 und 5 erkennen kann, ist die Unterseite 125 des Radialförderers 16 mit Spiralnuten 126, 126a, 126b .... versehen, zwischen denen sich entsprechende Stege 127, 127a, 127b .... befinden. Die Spiralnuten 126 enden innen in einem Abstand 128 von der Drehachse des Radialförderers 16. Es versteht sich, daß die Spiralnuten 126 in den Fig. 3 und 5 nicht maßstäblich eingezeichnet sind, ihre Tiefe liegt lediglich in der Größenordnung von einem hundertstel Millimeter, vorzugsweise nur einigen µ.

Bei schneller Rotation des Radialförderers 16 stellt sich das anhand des Verlaufes 129 gemäß Fig. 4 veranschaulichte radiale Druckprofil von der Oberfläche der Welle 33 bis in den Bereich ein, in dem der Pumpenraum 47 in den unteren Gaskanal 20 übergeht. Wie man aus Fig. 4 leicht erkennen kann, bildet sich in dem ringraumförmigen Bereich des Pumpenraums 47 zwischen der Unterseite 125 des Radialförderers 16 und der gegenüberliegenden Oberseite des Ringflansches 31 ein dynamisches Druckpolster durch ein positives Druckmaximum aus, mit dem im wesentlichen verhindert wird, daß Fördergas aus dem unteren Gaskanal 20 in den Pumpenraum 47 übertritt.

Schließlich zeigt Fig. 6 noch eine Variante der Erfindung, bei der im Gegensatz zu den bisher geschilderten Ausführungsbeispielen ein axiales Druckprofil am oberen Ende der Welle 33 eingestellt wird, das insgesamt vier Druckstufen aufweist.

Hierfür sind anstelle lediglich zweier Dichtungen (vgl. Dichtungen 45 und 46 in Fig. 1) drei Dichtungen 130, 131, 132 vorgesehen, die unterhalb des Pumpenraums 47 einen Schleusen-Druckraum 133 und einen Schleusen-Entspannungsraum 134 oberhalb des ersten Antriebsraumes 49 definieren.

Der Schleusen-Druckraum 133 steht über eine Inertgas-Druckleitung 135 mit einer Gas-Druckpumpe 137 in Verbindung, während der Schleusen-Entspannungsraum 134 über eine Ausgleichsleitung 136 an die Umgebung angeschlossen ist.

Bei der Konfiguration gemäß Fig. 6 wird mittels der Gas-Druckpumpe 137 im Schleusen-Druckraum 133 ein Überdruck, verglichen mit den beiden benachbarten Räumen 47, 134 eingestellt. Ein Leckfluß in den Pumpenraum 47 findet daher bei diesem Ausführungsbeispiel in umgekehrter Richtung, verglichen mit dem zuvor geschilderten Ausführungsbeispielen statt. Da jedoch die Gas-Druckpumpe 137 eine Edelgasmischung, vorzugsweise die im Gasförderteil 11 enthaltene Edelgasmischung selbst in dem Schleusen-Druckraum 133 einpumpt, ist dieser Leckfluß in den Pumpenraum 47 unkritisch. Soweit ein Leckfluß in den Schleusen-Entspannungsraum 134 auftritt, ist dies ebenfalls unkritisch, weil dieser Leckfluß in die Umgebung abströmt. Es versteht sich, daß die Ausgleichsleitung 136 auch über geeignete Mittel mit der Saugleitung 74 in Verbindung stehen kann.

## Patentansprüche

1. Gebläse zum Umwälzen großer Gasmengen, insbesondere für Hochleistungs-Laser nach dem Gastransport-Prinzip, mit einem Gasförderteil (11) und einem Antriebsteil (12), wobei das Gasförderteil (11) einen Radialförderer (16) aufweist, der in einer Verbindungsstrecke zwischen zwei Gaskanälen (18, 20) des Gasförderteils (11) angeordnet ist und das Antriebsteil (12) eine Welle (33) zum Antreiben des Radialförderers (16) mit hohen Drehzahlen umfaßt, wobei ferner die Welle (33) mit Radial-Drehlagern (34, 35) in einem druckdichten Gehäuse (30) gelagert ist und im Abstand von dem Radialförderer (16) auf der Welle (33) mindestens zwei axial wirkende Dichtungen (45, 46; 130, 131, 132) vorgesehen sind, die, vom Radialförderer (16) aus betrachtet, einen ersten Raum (47), mindestens einen Schleusenraum (48; 133, 134) sowie einen die Radial-Drehlager (34, 35) aufnehmenden Antriebsraum (49 bis 52) axial hintereinander bilden und wobei schließlich der mindestens eine Schleusenraum (48; 133, 134) und der Antriebsraum (49 bis 52) mit Leitungen (56, 65 bis 67, 74; 135, 136) zum Zu- oder Abführen von Druckmedien versehen sind, dadurch gekennzeichnet, daß der Radialförderer (16) an seiner Unterseite (125) mit in der Ebene der Unterseite (125) angeordneten Spiralnuten (126, 126a, 126b) versehen ist, so daß der erste Raum (47) als mit den Gaskanälen (20) verbundener Pumpenraum wirkt, daß der Schleusenraum (48) mit einer Vakuumpumpe (70) verbunden ist, die im Schleusenraum (48) einen gegenüber dem Pumpenraum (47) verminderten Druck einstellt, daß der Antriebsraum (49) mit einer Schmierölpumpe (62) verbunden ist, und daß der Antriebsraum (49) zusätzlich mit einer Druckluftpumpe (55) verbunden ist, die im Antriebsraum (49) einen gegenüber dem Schleusenraum (48) erhöhten Druck einstellt.

2. Gebläse nach Anspruch 1, dadurch gekennzeichnet, daß die Schmierölpumpe (62) Öl (59) aus einer Ölwanne (60) fördert und daß die Ölwanne (60) über eine Rückölpumpe (73) mit einem der Vakuumpumpe (70) vorgeschalteten Ölabscheider (71) verbunden ist.

3. Gebläse nach Anspruch 2, dadurch gekennzeichnet, daß dem Öl (59) der Ölwanne (60) ein verflüssigtes Gas, vorzugsweise Frigen, zugemischt ist, daß an die Ölwanne (60) oberhalb der Oberfläche des Öls (59) ein Eingang eines Verdichters (68) angeschlossen ist, in dem das vom Öl (59) verdampfende Gas komprimiert wird und daß das durch Kompression verflüssigte Gas dem Öl (59) wieder beigemengt wird.

4. Gebläse nach einem der Ansprüche 1 bis 3, dadurch gekennzeichnet, daß die Dichtungen (45, 46) mindestens eine axiale oder radiale Gleitdichtfläche aufweisen, wobei vorzugsweise die Dichtung (45) zwischen Pumpenraum (47) und Schleusenraum (48) eine Radial-Gleitringdichtung (105) mit zwischen Gehäuse (30) und Welle (33) wirkender axialer Gleitringfläche ist, ferner vorzugsweise die Dichtung (46) zwischen Schleusenraum (48) und Antriebsraum (49) eine Axial-Gleitringdichtung mit zwischen Gehäuse (30) und Welle (33) wirkender radialer Gleitringfläche ist, die Dichtung (46) zwischen Schleusenraum (48) und Antriebsraum (49) einen axialen Gleitring (107) aufweist, der elastisch auf einem Gegenring (109) aufliegt und vorzugsweise der axiale Gleitring (107) auf einem Umfang mit einem Ende eines Faltenbalgs (108) verbunden ist, dessen anderes Ende an einem Umfang des Gehäuses (30) anliegt und daß der Gegenring (109) auf der Welle (33) sitzt.

5. Gebläse nach Anspruch 4, dadurch gekennzeichnet, daß der Gegenring (109) mindestens einen Schmieröl führenden Kanal (111) aufweist und daß eine Bohrung (112) den Kanal (111) mit der Gleitringfläche zwischen Gleitring (107) und Gegenring (109) verbindet.

6. Gebläse nach Anspruch 5, dadurch gekennzeichnet, daß neben dem Gegenring (109) eines der Radial-Drehlager (34) zum Lagern der Welle (33) im Gehäuse (30) angeordnet ist und daß eine weitere Bohrung (113) des Gegenrings (109) vom Kanal (111) zu dessen Oberfläche führt und auf das Radial-Drehlager (34) gerichtet ist.

7. Gebläse nach Anspruch 5 oder 6, dadurch gekennzeichnet, daß jeweils mehrere Kanäle (111, 111a, 111b) und Bohrungen (112) bzw. weitere Bohrungen (113) über den Umfang des Gegenringes (109) verteilt angeordnet sind.

8. Gebläse nach einem der Ansprüche 4 bis 7, dadurch gekennzeichnet, daß die die Gleitringflächen der Dichtungen (45, 46) bildenden Teile mindestens teilweise aus Metall oder kunststoffgetränkter Kohle oder Graphit oder Kunststoff oder Keramik bzw. Kombinationen der vorgenannten Materialien bestehen.

9. Gebläse nach einem der Ansprüche 4 bis 8, dadurch gekennzeichnet, daß die Gleitringflächen der Dichtungen (45, 46) durch Justage oder Oberflächenbearbeitung definiert unparallel zueinander eingestellt werden, derart, daß sich beim Lauf der Welle (33) ein definierter Taumel in den Dichtungen (45, 46) ergibt.

10. Gebläse nach einem der Ansprüche 4 bis 9, dadurch gekennzeichnet, daß die Gleitringflächen der Dichtungen (45, 46) mit Spiral-Förderrinnen versehen sind.

11. Gebläse nach einem der Ansprüche 1 bis 10, dadurch gekennzeichnet, daß Sensoren (78, 79) zum Erfassen des Druckes im Schleusenraum (48) und im Pumpenraum (47) vorgesehen sind, daß die Sensoren (78, 79) an einen Regler (80) angeschlossen sind und daß der Regler (80) ausgangsseitig mit der Druckluftpumpe (55) und der Vakuumpumpe (70) in Wirkverbindung steht, derart, daß bei unterschiedlichen Drehzahlen des Gebläses (10) vorbestimmte Druckdifferenzen oder vorbestimmte Druckquotienten zwischen dem Pumpenraum (47), Schleusenraum (48) und Antriebsraum (49) herrschen.

12. Gebläse nach einem der Ansprüche 1 bis 11, dadurch gekennzeichnet, daß die Spiralnuten (126, 126a, 126b) in einem Abstand (128) von der Drehachse des Radialförderers (16) enden.

## Revendications

1. Soufflante pour le brassage d'importantes quantités de gaz, en particulier pour des lasers de grande puissance selon le principe du transport des gaz, comportant une partie de transport de gaz (11) et une partie d'entraînement (12), la partie de transport de gaz (11) comportant un transporteur radial (16) qui est placé, dans un parcours de liaison, entre deux conduits de gaz (18, 20) de la partie de transport de gaz (11) et la partie d'entraînement (12) comportant un arbre (33) destiné à entraîner le transporteur radial (16) à de grandes vitesses de rotation, l'arbre (33) étant en outre monté, par des paliers tournants radiaux (34, 35), dans une enveloppe (30) étanche sous pression et au moins deux organes d'étanchéité (45, 46; 130, 131, 132), agissant axialement, étant prévus sur l'arbre (33), à une certaine distance du transporteur radial (16), qui forment une première enceinte (47), au moins une enceinte de sas (48; 133, 134) ainsi qu'une enceinte d'entraînement (49 à 52), logeant les paliers tournants radiaux (34, 35), placées axialement l'une derrière l'autre et enfin une enceinte de sas au moins (48; 133, 134) et l'enceinte d'entraînement (49 à 52) étant pourvues de conduits (56, 65 à 67, 74; 135, 136) pour l'amenée ou l'évacuation de fluides sous pression, caractérisée en ce que le transporteur radial (16) est pourvu, sur sa face inférieure (125), de rainures en spirale (126, 126a, 126b) disposées dans le plan de la face inférieure (125), de manière que la première enceinte (47) agisse comme une enceinte de pompe reliée aux conduits de gaz (20), en ce que l'enceinte de sas (48) est reliée à une pompe à vide (70) qui établit, dans l'enceinte de sas (48), une pression inférieure à celle régnant dans l'enceinte de pompe (47), en ce que l'enceinte d'entraînement (49) est reliée à une pompe de lubrifiant (62) et en ce que l'enceinte d'entraînement (49) est reliée, en outre, à une pompe d'air comprimé (55) qui établit, dans l'enceinte d'entraînement (49), une pression supérieure à celle régnant dans l'enceinte de sas (48).

2. Soufflante selon la revendication 1, caractérisée en ce que la pompe de lubrifiant (62) envoie de l'huile (59) à partir d'un bac à huile (60) et en ce que le bac à huile (60) est relié, par une pompe de recyclage d'huile (73), à un séparateur d'huile (71) monté en amont de la pompe à vide (70).

3. Soufflante selon la revendication 2, caractérisée en ce qu'on ajoute à l'huile (59) du bac à huile (60), un gaz fluidifié, de préférence du fréon, en ce qu'on raccorde au bac à huile (60), au-dessus de la surface de l'huile (59), l'entrée d'un compresseur (68) dans lequel est comprimé le gaz évaporé de l'huile (59) et en ce que le gaz, fluidisé par compression est à nouveau ajouté à l'huile (59).

4. Soufflante selon l'une des revendications 1 à 3, caractérisée en ce que les organes d'étanchéité (45, 46) présentent au moins une surface d'étanchéité de glissement axial ou radial, l'organe d'étanchéité (45), placé entre l'enceinte de pompe (47) et l'enceinte de sas (48), étant de préférence une bague d'étanchéité à glissement radial (105) avec une surface annulaire de glissement axial, agissant entre l'enveloppe (30) et l'arbre (33), l'organe d'étanchéité (46), placé entre l'enceinte de sas (48) et l'enceinte d'entraînement (49), étant en outre de préférence une bague d'étanchéité à glissement axial avec une surface annulaire de glissement radial agissant entre l'enveloppe (30) et l'arbre (33), l'organe d'étanchéité (46), placé entre l'enceinte de sas (48) et l'enceinte d'entraînement (49), présentant une bague de glissement axial (107) qui repose élastiquement sur une contre-bague (109) et la bague de glissement axial (107) étant de préférence reliée, sur une périphérie, à l'extrémité d'un soufflet (108) dont l'autre extrémité s'applique sur un pourtour de l'enveloppe (30) et en ce que la contre-bague (109) est placée sur l'arbre (33).

5. Soufflante selon la revendication 4, caractérisée en ce que la contre-bague (109) présente au moins un conduit (111), acheminant l'huile de lubrification et en ce qu'un perçage (112) relie le conduit (111) à la surface annulaire de glissement, entre la bague de glissement (107) et la contre-bague (109).

6. Soufflante selon la revendication 5, caractérisée en ce qu'on place dans le carter (30), outre la contre-bague (109), l'un des paliers tournants radiaux (34) pour supporter l'arbre (33) et en ce qu'un autre perçage (113) de la contre-bague (109) mène du conduit (111) à sa surface et est dirigé vers le palier tournant radial (34).

7. Soufflante selon la revendication 5 ou 6, caractérisée en ce que plusieurs conduits (111, 111a, 111b) et perçages (112) ou autres perçages (113) sont répartis sur le pourtour de la contre-bague (109).

8. Soufflante selon l'une des revendications 4 à 7, caractérisée en ce que les parties, formant les surfaces annulaires de glissement des organes d'étanchéité (45, 46), sont au moins en partie en métal ou en carbone imprégné de matière plastique ou en graphique ou en matière plastique ou en céramique ou réalisées dans des combinaisons de ces matériaux.

9. Soufflante selon l'une des revendications 4 à 8, caractérisée en ce que les surfaces annulaires de glissement des organes d'étanchéité (45, 46) sont réglées de manière définie et non parallèles entre elles, par ajustage ou par usinage de surface, de manière que la rotation de l'arbre (33) entraîne une oscillation définie des organes d'étanchéité (45, 46).

10. Soufflante selon l'une des revendications 4 à 9, caractérisée en ce que les surfaces annulaires de glissement des organes d'étanchéité (45, 46) sont pourvues de gorges de transport en spirale.

11. Soufflante selon l'une des revendications 1 à 10, caractérisée en ce qu'on prévoit des capteurs (78, 79), destinés à enregistrer la pression régnant dans l'enceinte de sas (48) et dans l'enceinte de pompe (47), en ce que les capteurs (78, 79) sont raccordés à un régulateur (80) et en ce que le régulateur (80) est en liaison active, côté sortie, avec la pompe d'air comprimé (55) et la pompe à vide (70), de manière qu'en cas de vitesses de rotation différentes de la soufflante (10), il règne des différences de pression prédéterminées ou des rapports de pression prédéterminés entre l'enceinte de pompe (47), l'enceinte de sas (48) et l'enceinte d'entraînement (49).

12. Soufflante selon l'une des revendications 1 à 11, caractérisée en ce que les rainures en spirale (126, 126a, 126b) se terminent à une certaine distance (128) de l'axe de rotation du transporteur radial (16).

## Claims

1. A blower for circulating large gas volumes, in particular for high-power lasers of the gas-transportation principle, comprising a gas-transportation section (11) and a driving section (12), the gas-transportation section (11) comprising a radial compressor (16) being arranged in a connection duct between two gas channels (18, 20) of said gas-transportation section (11), and said driving section (12) comprising a shaft (33) for driving said radial compressor (16) at high rotational speed, said shaft (33) being journalled in a pressure-tight housing (30) by means of radial bearings (34, 35), at least two axially acting seals (45, 46; 130, 131, 132) being provided on said shaft (33) at a distance from said radial compressor (16), said seals, when seen from said radial compressor (16), defining a first chamber (47), at least one locking chamber (48; 133, 134) and a driving chamber (49–52) housing said radial bearings (34, 35), said chambers being axially aligned one after the other, said at least one locking chamber (48; 133, 134) and said driving chamber (49–52) being provided with ducts (56, 65–67, 74; 135, 136) for feeding or discharging of pressurized media, characterized in that the radial compressor (16) at its lower side (124) is provided with spiral flutes (126, 126a, 126b) arranged in one plane with said lower side (125), such that said first chamber (47) acts as a pump chamber connected with said gas channels (20), that said locking chamber (48) is connected with a vacuum pump (70) establishing in said locking chamber (48) a pressure below that within said pump chamber (47), that said driving chamber (49) is connected to a lubricating oil pump (62) and that said driving chamber (49), additionally, is connected with a compressed air pump (55), establishing in said driving chamber (49) a pressure above that within the locking chamber (48).

2. The blower of claim 1, characterized in that said lubricating oil pump (62) pumps oil from an oil pan (60), said oil pan (60) being connected by a return oil pump (73) with an oil separator (71) preceding said vacuum pump (70).

3. The blower of claim 2, characterized in that a liquified gas, preferably Freon is admixed to said oil (59) in said oil pan (60), that an inlet of a compressor (68), by which the gas evaporating from said oil (59) is condensed, is connected to said oil pan (60) above the surface of said oil (59) and that the gas having been liquified by compression, is again admixed to said oil (59).

4. The blower of any of claims 1 through 3, characterized in that said seals (45, 46) comprise at least one axial or radial sliding seal surface, with the seal (45) between said pump chamber (47) and said locking chamber (48) is preferably a radial sliding ring seal (105) with an axial sliding ring surface acting between said housing (30) and said shaft (33) and, further, the seal (46) between said locking room (48) and said driving room (49) is an axial sliding ring seal with a radial sliding ring surface acting between said housing (30) and said shaft (33), the seal (46) between said locking room (48) and said driving room (49) having an axial sliding ring (107) resting elastically on a counter ring (109) and, preferably, the axial sliding ring (107) on its periphery is connected with one end of a bellows (108), the other end of which resting against a periphery of said housing, and said counter ring (109) rests on said shaft (33).

5. The blower of claim 4, characterized in that the counter ring (109) is provided with at least one channel (111) guiding lubricating oil, and that a bore (112) interconnects said channel (111) with said sliding ring surface between said sliding ring (107) and said counter ring (109).

6. The blower of claim 5, characterized in that one of said radial bearings (34) for supporting said shaft (33) in said housing (30) is arranged next to said counter ring (109), and that a further bore (113) of said counter ring (109) is guided from said channel (111) to the surface of said counter ring and is directed towards said radial bearing (34).

7. The blower of claim 5 or 6, characterized in that a plurality of channels (111, 111a, 111b) and bores (112) or further bores (113), respectively, are distributed about the periphery of the counter ring (109).

8. The blower of any of claims 4 through 7, characterized in that the parts from which the sliding ring surfaces of said seals (45, 46) are made, at least partially consist of metal or carbon, impregnated with plastic material or of graphite or of plastic material or of ceramics or of a combination of the before-mentioned materials.

9. The blower of any of claims 4 through 8, characterized in that the sliding ring surfaces of said seals (45, 46) are adjusted vis-à-vis each other in a predetermined, non-parallel arrangement, either by adjustment or by machining of surfaces, such that during rotation of said shaft (33) a defined wobble movement is generated in said seals (45, 46).

10. The blower of any of claims 4 through 9, characterized in that the sliding ring surfaces of said seals (45, 46) are provided with spiraled transporting grooves.

11. The blower of any of claims 1 through 10, characterized in that sensors (78, 79) for sensing the pressure in said locking room (48) and in said pump room (47) are provided, said sensors (78, 79) being connected to a controller (80), and that said controller (90) coacts with its output with said compressed air pump (55) and said vacuum pump (70) such that during varying revolutions of said blower (10) predetermined differential pressures or predetermined pressure ratios prevail between said pump chamber (47), said locking chamber (48) and said driving chamber (49).

12. The blower of any of claims 1 through 11, characterized in that said spiral flutes (126, 126a, 126b) end at a distance (128) from said axis of rotation of said radial compressor (16).

Fig. 1

Fig. 2

EP 0 235 392 B1

Fig. 3

Fig. 4

16

126

127

126a

128

125

127a

126 b

127 b

**Fig. 5**

16

130

131

134

132

56

50

33

63

49

47

133

31

135

137

136

30

35

65

**Fig. 6**